(19) Europäisches Patentamt
European Patent Office
Office européen des brevets

(11) **EP 3 227 482 B1**

(12) **EUROPEAN PATENT SPECIFICATION**

(45) Date of publication and mention
of the grant of the patent:
**21.08.2024  Bulletin 2024/34**

(21) Application number: **15808559.7**

(22) Date of filing: **04.12.2015**

(51) International Patent Classification (IPC):
***D03D 1/00*** *(2006.01)*    ***D03D 5/00*** *(2006.01)*
***D03D 15/00*** *(2021.01)*

(52) Cooperative Patent Classification (CPC):
**D03D 5/00; D03D 1/0094; D03D 15/283;**
**D03D 15/47; D03D 15/587;** D10B 2401/041;
D10B 2505/04

(86) International application number:
**PCT/EP2015/078727**

(87) International publication number:
**WO 2016/087664 (09.06.2016 Gazette 2016/23)**

(54) **BELT EDGE**

GURTRAND

BORD DE CEINTURE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **05.12.2014   GB 201421689**

(43) Date of publication of application:
**11.10.2017   Bulletin 2017/41**

(73) Proprietor: **Clear Edge Germany GmbH**
**47608 Geldern-Walbeck (DE)**

(72) Inventors:
• **BARON, Dominic**
**Horwich**
**Bolton BL6 7QZ (GB)**

• **RIPPEL, Anna**
**47798 Krefeld (DE)**

(74) Representative: **Wilson Gunn**
**Blackfriars House**
**The Parsonage**
**5th Floor**
**Manchester M3 2JA (GB)**

(56) References cited:
GB-A- 2 304 676        JP-A- 2005 058 940
JP-A- H08 269 837      US-A- 3 076 252
US-A- 5 558 207        US-A- 5 615 713
US-A- 5 677 056

**Description**

Technical Field of the Invention

The present invention relates to a belt having an improved edge design and to a method for producing the same.

Background to the Invention

Tower press filters are commonly used for the filtration and separation of materials in the mining and mineral sectors. Tower press filters commonly comprise a single filter belt passing through a vertical stack of horizontal plates. Alternatively, tower presses may be of an individual belt design, whereby each individual filter plate is served by its own belt. Tower press belts are typically of a woven design, comprising a multitude of interlocking weft yarns and warp yarns. Warp yarns are typically longitudinal (i.e. run in the machine direction) and weft yarns are typically transverse (i.e. run perpendicular to the machine direction).

Tower press filter belts are commonly finished by a process known as heat setting. Heat setting is a process by which the woven belt fabric is subjected to a heat treatment, typically under an applied tension. The process imparts shape retention, resilience and elasticity to the fibres. Heat setting may also improve strength of the belt material. All these changes are connected with the structural and chemical modifications occurring within the fibre.

Tower press belts may be very long, being typically up to 200 m in length, hence accurate tracking and dimensional stability are essential characteristics in order to minimise belt wear and subsequent premature failure. A particularly common cause of belt failure in tower presses is that of edge wear. The edges of the belts are exposed to a great deal of mechanical wear, due to abrasion and movement. In order to provide accurate belt tracking and seal the ends of the belt weft yarns, thus preventing snagging or wearing against the belt guidance systems, it is common practice to seal or otherwise reinforce the edges of the belt, that is the outermost section of the belt outside of the filtration area. Without some form of belt edge sealing, the edges of the belt may fray, rendering the filter belt susceptible to further damage, since the frayed belt edges may become caught in the mechanism of the tower press, such as belt guides or rollers. This may further cause the tower press machine itself to jam, malfunction, or itself become damaged or unusable.

Currently, most tower press belts are sealed at the edges using ultrasonic technology. During the process, a sonotrode delivers ultrasound energy through the yarns of the belt to an anvil such that the fabric surface is transformed. The design of the anvil imparts parallel or diagonal lines down the belt edges which, in theory, bind the warp and weft yarns to produce a tougher, more durable edge in order to minimize wear during operation of the belt. During the ultrasonic sealing operation the belts are frequently simultaneously slit by using additional sonotrodes together with cutting blades.

Ultrasonic technology has some drawbacks. It degrades the yarns, as the yarns are fused together, resulting in a differential in modulus and elongation properties on the edge of the belt compared with the body of the fabric which may lead to bowing, warping or rippling of the belt. In some cases, this leads to tracking problems on the filter machines. Further, ultrasonic technology combined with slitting causes the cutting blades to wear out quickly, resulting in poor quality edges and sealing.

Other belt edge sealing technologies includes hot-knife slitting and edge sealing coating with synthetic rubbers or polymers.

Hot knife technology seals only the last 1-2 mm of a belt edge and the edge has a rough appearance. More or wider security is needed to achieve expected belt lifetimes and a smooth edge is vital to minimise abrasion when the side of the belt comes into contact with guiding mechanisms on the tower press filter machine.

Edge coating involves a slow curing process and is therefore very inefficient in terms of manufacturing and the effectiveness of the coating is limited due to the low penetration of glues into the yarn structure.

The document US 5615713 A discloses a filter belt where the warp and weft yarns have a linear density of 2222 dtex (2000 denier). It is therefore an object of embodiments of the present invention to provide a belt that exhibits reduced edge wear during use, thus needing less frequent replacement.

It is another object of embodiments of the present invention to provide a belt having an improved surface appearance after edge sealing;

A further object of embodiments of the present invention is to provide a more efficient method for manufacturing a belt and sealing the edges thereof.

Summary of the Invention

According to a first aspect of the invention there is provided a belt for a tower filter press comprising a warp yarn and a weft yarn, wherein the belt comprises a fused region along each longitudinal edge of the belt, said fused region being formed from the warp yarn, the weft yarn and a yarn provided for fusing the warp yarn and the weft yarn together, wherein the linear density of the warp yarn and/or the weft yarn is from 2200 to 4400 dtex and the fusing yarn is provided parallel to the warp yarns.

For ease of reading, the term "yarn provided for fusing the warp yarn and the weft yarn" shall hereafter be referred to as "fusing yarn".

Each longitudinal edge of the belt comprises a fused region otherwise the shape of the belt may become distorted, i.e. curved, which is undesirable. Further, if only one of the longitudinal edges comprises a fused region then the belt may have to be replaced more frequently because the non-fused edge will still exhibit an increased susceptibility to fraying.

The melting point of the fusing yarn is below the melting point of the weft yarn and the warp yarn.

Preferably the melting point of the fusing yarn is below the melting point of the warp and weft yarns and above the operating temperature of the filter press machine.

The melting point of the fusing yarn may be between 70 and 140 °C, for instance, when the warp and weft yarns comprise polypropylene. The melting point of the fusing yarn may be between 70 and 180 °C, for example, when the warp and weft yarns comprise polyester.

The fusing yarn may comprise one or more polymers. Preferred polymers include low density polyethylene, polyester, polyamides, copolyester, copolyamide or a mixture thereof.

In an embodiment not according to the invention, the fusing yarn may be made of the same material as the weft and warp yarns. However, when the warp, weft and fusing yarns are made of the same materials, it is preferred that the density of the fusing yarn is below the density of the warp and weft yarns or is a copolymer variant. For instance, the fusing yarn may comprise low density polyethylene when the warp and weft yarns comprise polyethylene. Similarly, the fusing yarn may comprise a copolymer polyester when the warp and weft yarns comprise polyester.

According to the invention the fusing yarn may be made of a material that differs from the warp and weft yarns, with the fusing yarn having a melting point below that of the warp and weft yarns.

The fusing yarn may contain bi-component filament (s) comprising different polymers. The bi-component yarn can have a multifilament, staple or monofilament structure. The bi-component filaments can also have a core sheath structure where one of the components (the core) is fully surrounded by a second component (the sheath). For such yarns, the sheath preferably has a melting point below the melting point of the warp and weft yarns. The fusing yarn having a core sheath structure preferably comprises copolyester and co-polyamide polymers or polyamide and copolyamide polymers.

Each fused edge region preferably has a width between 5 mm and 70 mm. A width of 30 mm is particularly preferred.

Preferably the width of each fused edge region is between 30 mm and 70 mm, between 40 mm and 70 mm or between 50 mm and 70 mm.

When the belt is a filter belt, it is preferred that the width of the fused edge region does not overlap with the filtration area, otherwise a reduction in filtration efficiency may be observed due the fused edge region being substantially impermeable. The filtration area may be encroached upon when the width of the fused edge region is greater than 70 mm.

The fused edge region preferably has a width of not less than 5mm, otherwise there may be insufficient fusing yarns to ensure that the warp and weft yarns are properly fused with the fusing yarns and that there is still enough melted area left in the direction of the belt body.

Preferably the belt's longitudinal edges are as strong as possible since they may be continually subjected to wear and abrasion in normal use, for instance when used in a filtration apparatus, as the belt passes along guides which are used to ensure accurate tracking of the belt. Should the outer edges become damaged or worn through abrasive forces, particle entrainment, etc., they fray easily and minor damage quickly propagates as loose/free yarns catch on the guides and are pulled or ripped free. Belts of the present invention having a width of between 5 and 70 mm exhibit improved edge strength relative to belt edges that are sealed using conventional sealing methods such as embossing and hot knife slitting which provide no or very little additional strength reinforcement to the edge of the belt. The belt of the invention exhibiting improved edge strength therefore offers a wider region of security, i.e. before fraying occurs, and prolongs the period of time before which the belt must be replaced.

Preferably the diameter of the fusing yarn is between 0.10 mm and 0.60 mm when the fusing yarn is a monofilament yarn

Preferably the linear density of the fusing yarn is between 25 and 500 dtex when the fusing yarn is a multifilament yarn. In the case of fusing yarns of staple yarn construction, the preferable range of equivalent dtex is from 25 to 500.

The warp yarn may comprise a polymer selected from polypropylene, polyethylene terephthalate, polyethylene, polybutylene terephthalate, polyphenylene sulphide, poly-paraphenylene terephthalamide or a combination thereof.

The weft yarn may also comprise a polymer selected from polypropylene, polyethylene terephthalate, polyethylene, polybutylene terephthalate, polyphenylene sulphide, polyamide or poly-paraphenylene terephthalamide or a combination thereof.

Preferably the warp yarn and the weft yarn are not made of a natural fibres since these are less suitable for use in filter belts, particularly tower press filter belts.

It is preferred that the linear density of the warp yarn is from 150 to 4400 dtex, preferably from 1100-2200 dtex. The weft yarn may also have a linear warp density from 150 to 4400 dtex, preferably from 1100-2200 dtex.

Monofilament weft yarns may also be used between 0,2mm and 0,6mm.

Preferably the warp yarn and the weft yarn comprise polypropylene or polyester.

The warp yarn and/or weft yarn may have a monofilament, multifilament yarn or staple fibre structure. The belt may comprise a plain weave, a twill weave, a satin weave or a double plain weave.

Due to the improved stability of the belt, particularly at the belt's edges, the belt may comprise a tracer yarn to act as a guide. The tracer yarn may be incorporated into the belt by replacing one or more warp yarns with one or more tracer yarns. In this connection the tracer yarns, which have a different colour to the main body of the belt, are woven into the belt in the same manner as the warp yarns. Advantageously, the provision of a tracer yarn allows the belt to be aligned accurately within the apparatus which promotes straight and true linear tracking of the belt.

According to a second aspect of the invention there is provided a method for producing a belt according to claim 12.

The method according to the second aspect of the invention may be used to manufacture the belt according to the first aspect of the invention. The method according to the second aspect of the invention may, as appropriate, incorporate any or all of the features described in relation to the belt according to the first aspect of the invention

In a preferred embodiment the fusing yarns are provided in an alternating arrangement (1:1) with the warp yarns. Other possible ratios of fusing yarns to warp yarns may be 1:2, 1:3, 1:4, 2:1, 3:1 or 4:1.

Preferably the fusing yarns which replace the warp yarns at the longitudinal edge region are woven into the belt in the same manner as the warp yarns.

The fusing yarn may be provided substantially parallel to the warp yarn.

The heat treatment used to fuse the yarns may be a heat treatment used to heat set the belt. Alternatively, the heat treatment used to heat set the belt and the heat treatment used to fuse the warp and weft yarns may be performed in two separate heat treatment steps. During the heat treatment, the fusing yarns melt into the warp and weft yarns thereby fusing the warp and weft yarns together. This reinforces the edge of the belt.

When the warp and weft yarns comprise polypropylene, the heat treatment may be performed at a temperature between 125°C and 145°C. Such a heat treatment is suitable for heat setting the belt and fusing the warp and weft yarns. The heat treatment is preferably performed at a temperature between 135 °C and 140°C.

Preferably the warp and/or weft yarns are not cut or severed prior to or during the step of subjecting the belt to the heat treatment since this may reduce the tensile strength of the fused region thus obtained.

Following the heat treatment for fusing the yarns, a hot knife may be used to slit the belt in order to obtain a smooth slit edge. In this way fraying of the edge may be prevented. In addition, the tensile properties of the belt in the fused region are at least comparable to the tensile properties of the main body of the belt.While the method according to second aspect of the invention is particularly suitable for manufacturing filter belts, and particularly those for use in tower press belt applications, it may also be employed to manufacture other filtration belts or belts for conveying applications. For instance, the method may be used to manufacture horizontal vacuum filter belts, belt press belts, conveyer belts and belts for rotary vacuum dryers with belt discharge.

According to a third aspect of the invention there is provided a filter belt comprising a warp yarn and a weft yarn, wherein the filter belt comprises a fused region along each longitudinal edge of the belt, said fused region being formed from the warp yarn, the weft yarn and a yarn provided for fusing the warp yarn and the weft yarn together where they meet.

Due to the substantially impermeable nature of the fused edge, it may act as a seal against sideways leakage either directly or via capillary action during filtration. Further, when the belt is employed in vacuum filter applications, i.e. as a vacuum filter belt, the flat parallel structure at the belt's edges also enables a better vacuum seal to be obtained with no or little suction being drawn in from the sides.

The filter belt according to the third aspect of the invention may incorporate any or all of the features described in relation to belt according to the first aspect of the invention, as appropriate. The filter belt according to third aspect of the invention may also be manufactured by the method according to the second aspect of the invention.

According to a fourth aspect of the invention there is provided a vertical filtration apparatus, such as a tower press, comprising a belt according to the first or third aspects of the invention. The apparatus according to the fourth aspect of the invention may, as appropriate, incorporate any or all of the features described in relation to belt according to the first aspect or the third aspect of the invention.

The filter belt is particularly suitable for use in tower press belt applications.

Detailed Description of the Invention

In order that the invention may be more clearly understood an embodiment/embodiments thereof will now be described, by way of example only, with reference to the accompanying drawings, of which:

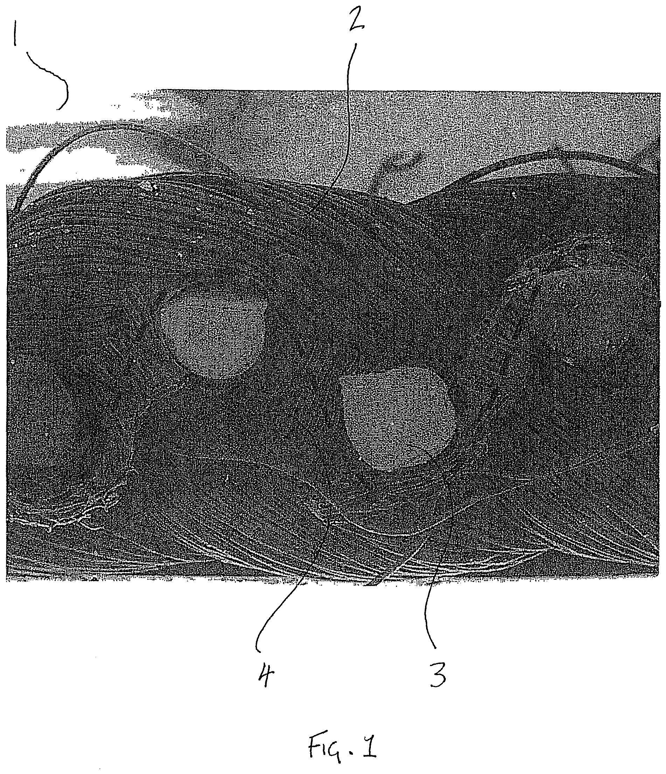

Figure 1      shows a cross section of belt comprising warp yarns, weft yarns and a fused region formed from the warp yarn, the weft yarn and the yarn for fusing the warp and weft yarns.

The above embodiment is described by way of example only. Many variations are possible without departing from the scope of the invention.

Figure 1 shows a cross section of a belt (1) comprising a plurality of interlocking warp yarns (2) and weft yarns (3). The warp yarns are longitudinal (i.e. they run in machine direction) and the weft yarns are woven through the warp yarns in a direction perpendicular to the machine direction. Further yarns (4) for fusing the warp yarns and the weft yarns are provided substantially parallel with the warp yarns (i.e. they also run in the machine direction) at each longitudinal edge of the belt.

In this example the warp yarn (2) is made of multifilament polypropylene and has a linear density of 2200 dtex. The weft yarn is made of monofilament polypropylene with a diameter of 0.5 mm. The fusing yarn (4) is made of low-density polyethylene having a diameter of 0.22 mm.

The following formula may be used to determine the optimum number of fusing yarns (FY) at each belt edge, where WT is the number of warp threads per cm, WE is the width of the edge (cm) and R is the desired ratio of FY: WT:

$$\text{No. of FY} = (\text{WT}) \times (\text{WE}) \times (\text{R})$$

In this example, the frequency of fusing yarns to warp yarns at the belt edges is 1:1, with the fusing yarns being provided in an alternating arrangement with the warp yarns. Further, the edge width is 3 cm and there are 27 warp threads per cm, such that 81 fusing yarns are provided at each belt edge.

The belt (1) comprising warp (2), weft (3) and fusing yarns (4) is subjected to a heat treatment in order to heat set the belt. The polypropylene belt with fusing yarns is heated to a temperature between 135 and 140 °C. The heat treatment causes the low-density polyethylene fusing yarns, having a melting point below that of the polypropylene warp and weft yarns, to melt. This melting allows the polymer to flow over the belt surface giving an appearance similar to that imparted when a "hot melt" glue is used to seal edges of a belt. This provides a good aesthetic appearance, but importantly the warp and weft yarns are physically bonded/fused together where they meet. The region in which bonding/fusing of the yarns occurs may be termed a fused region" or a "fused edge region". In this example, each fused edge region is 3 cm in width.

A "Hot-knife" is then used to slit and seal the outermost 1-2 cm of the belt edge. This prevents or at least reduces fraying, without any significant differential in tensile properties compared to the main body of the belt.

Tensile strength tests were performed according to DIN EN ISO 13934 (ZWICK/ROELL, Type 1465, Ser.No. 114374/04) on belts having an identical warp and weft construction and weave design in order to determine the strength of the main body of the belt (C1), the strength of an embossed edge of the belt (C2) and the strength of a fused edge of the belt (E1). The test samples were 25 mm wide and 50 mm in length. The results of the test are shown in Table 1.

The comparison work showed that a reduction in tensile strength within the embossed edge takes place, whereas the tensile strength of the fused edge remains nearly the same. The embossing damages the structure of the warp and weft yarns in the edge region, thus weakening the yarns. The resulting belt edge is significantly reduced in strength as a result. In the case of the present invention the warp and weft are not weakened. The belt edge is at least as strong as the main body of the belt, the main body corresponding to the filtration region of a filter belt. The belt of the present invention also exhibits improved edge durability.

Table 1

| Samples | F/max (N/cm) | L @ F-max (%) | Yarn-diameter (warp/weft) | Polymer | Weave pattern |
|---|---|---|---|---|---|
| C1 | 2706,7 | 32,7 | dtex 2200/dtex 2200 tape | Polypropylene | Twill |
| C2 | 1463,1 | 16,4 | dtex 2200/dtex 2200 tape | Polypropylene | Twill |
| E1 | 2979,8 | 34,7 | dtex 2200/dtex 2200 tape | Polypropylene | Twill |

## Claims

1. A filter belt for a tower filter press comprising a warp yarn and a weft yarn, wherein the belt comprises a fused region along each longitudinal edge of the belt, said fused region being formed from the warp yarn, the weft yarn and a yarn provided for fusing the warp yarn and the weft yarn together, wherein the linear density of the warp yarn and/or the weft yarn is from 2200 to 4400 dtex, the fusing yarn is provided parallel to the warp yarns and the melting point of the fusing yarn is below the melting point of the weft yarn and the warp yarn

2. A filter belt according to claim 1, wherein the melting point of the fusing yarn is between 70 and 180°C.

3. A filter belt according to claim 1 or claim 2, wherein the fusing yarn comprises a low density polyethylene, a polyester, a polyamide, a copolyester a copolyamide or a mixture thereof, and optionally wherein the fusing yarn has a density below the density of the warp and weft yarns.

4. A filter belt according to any one of the preceding claims, wherein the fusing yarn comprises low density polyethylene and the warp and weft yarns comprise polyethylene or polypropylene.

5. A filter belt according to any one of the preceding claims, wherein the fusing yarn is a bi-component yarn, and optionally wherein the bi-component yarn comprises a core sheath structure, said sheath having a melting point below the melting point of the warp and weft yarns, and optionally wherein the bi-component yarn comprises polyester and copolyester or polyamide and copolyamide yarns.

6. A filter belt according to any one of the preceding claims, wherein the fusing yarn has a monofilament, staple or multifilament structure, and optionally wherein the warp yarn has a monofilament, staple or multifilament structure

7. A filter belt according to any one of the preceding claims, wherein the ratio of fusing yarns to warp yarns is 1:1, 1:2, 1:3, 1:4, 2:1, 3:1 or 4:1.

8. A filter belt according to any one of the preceding claims, wherein each fused edge region has a width between 5 mm and 70 mm, and optionally wherein the fused edge region has a width between 30 and 70 mm, and optionally wherein the fused edge region has a width between 50 and 70 mm.

9. A filter belt according to any one of the preceding claims, wherein the diameter of the fusing yarn is between 0.10 mm and 0.60 mm.

10. A filter belt according to any one of the preceding claims, wherein the warp yarn and/or the weft yarn comprises a polymer selected from polypropylene, polyethylene terephthalate, polyethylene, polybutylene terephthalate, polyphenylene sulphide, poly-paraphenylene terephthalamide or a combination thereof.

11. A filter belt according to any one of the preceding claims, wherein the belt comprises a plain weave, double plain weave, a twill weave or a satin weave, and optionally wherein the belt comprises a tracer yarn.

12. Method for producing a filter belt for a tower press filter comprising the steps of:

a. providing a plurality of warp yarns and a plurality of weft yarns, wherein the linear density of the warp yarn and/or the weft yarn is from 2200 to 4400 dtex;
b. providing a plurality of yarns for fusing the warp yarns and the weft yarns where they meet, said fusing yarns being provided along each longitudinal edge of the belt and parallel to the warp yarns, and wherein the melting point of the fusing yarns is below the melting point of the weft yarns and the warp yarns;
c. weaving the plurality of weft yarns through the warp yarns and fusing yarns for bonding the warp and weft yarns, and
d. subjecting the belt thus formed to a heat treatment to melt the fusing yarns and form a fused region in which the weft yarns and the warp yarns are fused together by the melted fusing yarn.

13. Method according to claim 12, wherein the method comprises the step of hot-knife slitting the belt after the heat treatment.

14. A filter belt according to any one of claims 1-11, wherein the filter belt is a tower press filter belt.

15. A filtration apparatus comprising a belt according to any of claims 1-11 or claim 14.

**Patentansprüche**

1. Filtergurt für eine Turmfilterpresse mit einem Kettgarn und einem Schussgarn, wobei der Gurt einen verschmolzenen Bereich entlang jedes Längsrandes des Gurtes aufweist, wobei der verschmolzene Bereich aus dem Kettgarn, dem Schussgarn und einem Garn gebildet ist, das zum Verschmelzen des Kettgarns und des Schussgarns miteinander bereitgestellt ist, wobei die lineare Dichte des Kettgarns und/oder des Schussgarns von 2200 bis 4400 dtex beträgt, wobei das Verschmelzungsgarn parallel zu den Kettgarnen bereitgestellt ist und wobei der Schmelzpunkt des Verschmelzungsgarns unter dem Schmelzpunkt des Schussgarns und des Kettgarns liegt.

2. Filtergurt nach Anspruch 1, wobei der Schmelzpunkt des Verschmelzungsgarns zwischen 70 und 180 °C liegt.

3. Filtergurt nach Anspruch 1 oder Anspruch 2, wobei das Verschmelzungsgarn ein Polyethylen niedriger Dichte, einen Polyester, ein Polyamid, einen Copolyester, ein Copolyamid oder ein Gemisch davon aufweist, und, optional, wobei das Verschmelzungsgarn eine Dichte aufweist, die unter der Dichte der Kett- und Schussgarne liegt.

4. Filtergurt nach einem der vorhergehenden Ansprüche, wobei das Verschmelzungsgarn Polyethylen niedriger Dichte aufweist und die Kett- und Schussgarne Polyethylen oder Polypropylen aufweisen.

5. Filtergurt nach einem der vorhergehenden Ansprüche, wobei das Verschmelzungsgarn ein Zweikomponentengarn ist, und, optional, wobei das Zweikomponentengarn eine Kernmantelstruktur aufweist, wobei der Mantel einen Schmelzpunkt unterhalb des Schmelzpunkts der Kett- und Schussgarne aufweist, und, optional, wobei das Zweikomponentengarn Polyester- und Copolyester- oder Polyamid- und Copolyamidgarne aufweist.

6. Filtergurt nach einem der vorhergehenden Ansprüche, wobei das Verschmelzungsgarn eine Monofilament-, Stapel- oder Multifilamentstruktur aufweist, und, optional, wobei das Kettgarn eine Monofilament-, Stapel- oder Multifilamentstruktur aufweist.

7. Filtergurt nach einem der vorhergehenden Ansprüche, wobei das Verhältnis von Verschmelzungsgarnen zu Kettgarnen 1:1, 1:2, 1:3, 1:4, 2:1, 3:1 oder 4:1 beträgt.

8. Filtergurt nach einem der vorhergehenden Ansprüche, wobei jeder verschmolzene Randbereich eine Breite zwischen 5 mm und 70 mm hat, und, optional, wobei der verschmolzene Randbereich eine Breite zwischen 30 und 70 mm hat, und, optional, wobei der verschmolzene Randbereich eine Breite zwischen 50 und 70 mm hat.

9. Filtergurt nach einem der vorhergehenden Ansprüche, wobei der Durchmesser des Verschmelzungsgarns zwischen 0,10 mm und 0,60 mm liegt.

10. Filtergurt nach einem der vorhergehenden Ansprüche, wobei das Kettgarn und/oder das Schussgarn ein Polymer aufweist, ausgewählt aus Polypropylen, Polyethylenterephthalat, Polyethylen, Polybutylenterephthalat, Polyphenylensulfid, Polyparaphenylenterephthalamid oder einer Kombination davon.

11. Filtergurt nach einem der vorhergehenden Ansprüche, wobei der Gurt eine Leinwandbindung, eine doppelte Köperbindung, eine Köperbindung oder eine Satinbindung aufweist und, optional, ein Markierungsgarn aufweist.

12. Verfahren zur Herstellung eines Filtergurtes für eine Turmfilterpresse, aufweisend die folgenden Schritte:

> a. Bereitstellen einer Vielzahl von Kettgarnen und einer Vielzahl von Schussgamen, wobei die lineare Dichte des Kettgarns und/oder des Schussgams zwischen 2200 und 4400 dtex liegt;
> b. Bereitstellen einer Vielzahl von Garnen zum Verschmelzen der Kettgarne und der Schussgarne, wo sie zusammentreffen, wobei die Verschmelzungsgarne entlang jedes Längsrandes des Gurtes und parallel zu den Kettgarnen bereitgestellt werden und wobei der Schmelzpunkt der Verschmelzungsgarne unter dem Schmelzpunkt der Schussgarne und der Kettgarne liegt;
> c. Weben der Vielzahl von Schussgamen durch die Kettgarne und die Verschmelzungsgame zum Verbinden der Kett- und Schussgarne, und
> d. Unterziehen des so gebildeten Gurtes einer Wärmebehandlung, um die Verschmelzungsgame zu schmelzen und einen verschmolzenen Bereich zu bilden, in dem die Schussgarne und die Kettgarne durch das geschmolzene Verschmelzungsgarn miteinander verschmolzen werden.

**13.** Verfahren nach Anspruch 12, wobei das Verfahren den Schritt aufweist, den Gurt nach der Wärmebehandlung mit einem Heißmesser zu schlitzen.

**14.** Filtergurt nach einem der Ansprüche 1 bis 11, wobei der Filtergurt ein Turmfilterpressen-Filtergurt ist.

**15.** Filtrationsvorrichtung, aufweisende einen Gurt nach einem der Ansprüche 1-11 oder nach Anspruch 14.


**Revendications**

**1.** Ceinture de filtre pour un filtre-presse à tour comprenant un fil de chaîne et un fil de trame, dans laquelle la ceinture comprend une région fondue le long de chaque bord longitudinal de la ceinture, ladite région fondue étant formée du fil de chaîne, du fil de trame et d'un fil prévu pour fondre le fil de chaîne et le fil de trame ensemble, dans laquelle la masse volumique linéaire du fil de chaîne et/ou du fil de trame va de 2200 à 4400 dtex, le fil de fusion étant prévu parallèlement aux fils de chaîne et le point de fusion du fil de fusion est inférieur au point de fusion du fil de trame et du fil de chaîne.

**2.** Ceinture de filtre suivant la revendication 1, dans laquelle le point de fusion du fil de fusion est compris entre 70 et 180°C.

**3.** Ceinture de filtre suivant la revendication 1 ou la revendication 2, dans laquelle le fil de fusion comprend un polyéthylène à basse masse volumique, un polyester, un polyamide, un copolyester, un copolyamide ou leurs mélanges, et dans laquelle éventuellement le fil de fusion a une masse volumique inférieure à la masse volumique des fils de chaîne et de trame.

**4.** Ceinture de filtre suivant l'une quelconque des revendications précédentes, dans laquelle le fil de fusion comprend du polyéthylène basse masse volumique et les fils de chaîne et de trame comprennent du polyéthylène ou du polypropylène.

**5.** Ceinture de filtre suivant l'une quelconque des revendications, dans laquelle le fil de fusion est un fil à bi-composants, et dans laquelle éventuellement le fil à bi-composants comprend une structure de cœur gaine, ladite gaine ayant un point de fusion inférieur au point de fusion des fils de chaîne et de trame, et dans laquelle éventuellement le fil à bi-composants comprend des fils de polyester et de copolyester ou de polyamide et de copolyamide.

**6.** Ceinture de filtre suivant l'une quelconque des revendications précédentes, dans laquelle le fil de fusion a une structure de monofilament, de fibre coupée ou de multifilament, et dans laquelle éventuellement le fil de chaîne a une structure de monofilament, de fibre coupée ou de multifilament.

**7.** Ceinture de filtre suivant l'une quelconque des revendications précédentes, dans laquelle le rapport des fils de fusion aux fils de chaîne est de 1:1, 1:2, 1:3, 1:4, 2:1, 3:1 ou 4:1.

**8.** Ceinture de filtre suivant l'une quelconque des revendications précédentes, dans laquelle chaque région de bord fondu a une largeur comprise entre 5 mm et 70 mm, et dans laquelle éventuellement la région de bord fondue a une largeur comprise entre 30 et 70 mm, et dans laquelle éventuellement la région de bord fondue a une largeur comprise entre 50 et 70 mm.

**9.** Ceinture de filtre suivant l'une quelconque des revendications précédentes, dans laquelle le diamètre du fil de fusion est compris entre 0,10 mm et 0,60 mm.

**10.** Ceinture de filtre suivant l'une quelconque des revendications précédentes, dans laquelle le fil de chaîne et/ou le fil de trame comprend un polymère choisi parmi le polypropylène, le poly(téréphtalate d'éthylène), le polyéthylène, le poly(téréphtalate de butylène), le poly(sulfure de phénylène), le poly(paraphénylène téréphtalamide) ou leurs combinaisons.

**11.** Ceinture de filtre suivant l'une quelconque des revendications précédentes, dans laquelle la ceinture comprend une armure toile, une armure double lisse, une armure diagonale ou une armure satin, et dans laquelle éventuellement la ceinture comprend un fil de repère.

**12.** Procédé de production d'une ceinture de filtre pour un filtre-presse à tour, comprenant les stades dans lesquels :

a. on de procure une pluralité de fils de chaîne et une pluralité de fils de trame, dans lequel la masse volumique linéaire du fil du chaîne et/ou du fil de trame va de 2200 à 4400 dtex ;

b. on se procure une pluralité de fils pour faire fondre les fils de chaîne et les fils de trame lorsqu'ils se rencontrent, lesdits fils de fusion étant prévus le long de chaque bord longitudinal de la ceinture et étant parallèles aux fils de chaîne, et dans lequel le point de fusion des fils de fusion est inférieur au point de fusion des fils de trame et des fils de chaîne ;

c. on tisse la pluralité de fils de trame par les fils de chaîne et on fond des fils pour lier les fils de chaîne et de trames ; et

d. on soumet la ceinture ainsi formée à un traitement thermique pour faire fondre les fils de fusion et former une région fondue, dans laquelle les fils de trame et les fils de chaîne sont fondus ensemble par le fil de fusion fondu.

**13.** Procédé suivant la revendication 12, dans lequel le procédé comprend le stade, dans lequel on fend par un couteau chaud la ceinture après le traitement thermique.

**14.** Procédé suivant l'une quelconque des revendications 1 à 11, dans lequel la ceinture de filtre est une ceinture de filtre-presse à tour.

**15.** Installation de filtration comprenant une ceinture suivant l'une quelconque des revendications 1 à 11 ou suivant la revendication 14.

Fig. 1

**EP 3 227 482 B1**

**REFERENCES CITED IN THE DESCRIPTION**

**Patent documents cited in the description**

- US 5615713 A